## Europäisches Patentamt

## European Patent Office

## Office européen des brevets

(11) Veröffentlichungsnummer: **0 419 684 A1**

(12)
# EUROPÄISCHE PATENTANMELDUNG
## veröffentlicht nach Art. 158 Abs. 3 EPÜ

(21) Anmeldenummer: 90906433.9

(22) Anmeldetag: **04.04.90**

(86) Internationale Anmeldenummer: **PCT/SU90/00085**

(87) Internationale Veröffentlichungsnummer: **WO 90/12219 (18.10.90 90/24)**

(51) Int. Cl.⁵: **F16D 69/02**

(30) Priorität: 04.04.89 SU 4672584
10.07.89 SU 4716748
15.09.89 SU 4766345
18.01.90 SU 4784102

(43) Veröffentlichungstag der Anmeldung:
**03.04.91 Patentblatt 91/14**

(84) Benannte Vertragsstaaten:
**BE DE FR GB IT SE**

(71) Anmelder: **ZAPOROZHSKY AVTOMOBILNY ZAVOD 'KOMMUNAR' (PROIZVODSTVENNOE OBIEDINENIE 'AVTOZAZ')**
**pr. Lenina 8**
**Zaporozhie, 330600(SU)**

Anmelder: **ZAPOROZHKOE PROIZVODSTVENNOE OBIEDINENIE "MOTOROSTROITEL"**
**ul. 8 Marta**
**Zaporozhie, 330064(SU)**

(72) Erfinder: **MORGUN, Vladimir Vladimirovich**
**ul. Paramonova, 4a-45**
**Zaporozhie, 330059(SU)**
Erfinder: **LEBEDENKO, Sergei Stepanovich**
**ul. Zaporozhstroevskaya, 4-45**
**Zaporozhie, 330048(SU)**
Erfinder: **KRAVCHUN, Stepan Ivanovich**
**ul. Malinovskogo, 16-143**
**Zaporozhie, 330104(SU)**
Erfinder: **KHUPOVKA, Viktor Petrovich**
**pr. Lenina, 44-11**
**Zaporozhie, 330063(SU)**
Erfinder: **BOGUSLAEV, Vyacheslav Alexandrovich**
**ul. Omskaya, 5-28**
**Zaporozhie, 330068(SU)**

(74) Vertreter: **Patentanwälte Zellentin & Partner**
**Zweibrückenstrasse 15**
**W-8000 München 2(DE)**

EP 0 419 684 A1

(54) **REIBUNGSELEMENT EINES REIBUNGSPAARES.**

(57) Die Erfindung bezieht sich auf Reibpaarungen von Maschinenteilen.

Das Friktionselement einer Reibpaarung enthält ein dreidimensionales Gerüst (1), das in einer Matrix (2) in der Zone der Reibfläche (4) untergebracht ist.

Das Gerüst (1) ist aus einem verschleissfesten Werkstoff und die Matrix (2) aus einem Werkstoff mit hoher Wärmeleitzahl hergestellt. Das Gerüst (1) weist eine Zellenstruktur auf, die durch Waben, ein gewelltes Band und dergleichen gebildet ist. Das Gerüst (1) ragt teilweise über die Oberfläche der Matrix (2) derart hervor dass die beiden gemeinsam eine Reibfläche (4) mit regelmässigem Mikrorelief bilden. Der über die Matrix (2) ragende Flächeninhalt des Gerüstes nimmt proportional in Richtung von der Zone der Maximalbelastung zur Zone der Minimalbelastung ab.

Die Erfindung kann in Bremseinrichtungen, beispielsweise in Bremsscheiben und -trommeln von Personenkraftwagen, in Kupplungsscheiben und dergleichen verwendet werden.

FIG.3

## FRIKTIONSELEMENT EINER REIBPAARUNG

Technisches Gebiet

Die Erfindung bezieht sich auf Reibpaarungen von Maschinenteilen und betrifft insbesondere ein Friktionselement einer Reibpaarung.

Stand der Technik

Es ist eine Reibscheibe (US, A, 3773153) bekannt, die zusammengesetzt ausgeführt ist, und zwar sind ihre Aussenteile aus Stahl, der Kern aber aus gewellten Aluminiumplatten hergestellt.

Durch die Herstellung der Scheibenaussenteile aus Stahl mit gleichen physikalisch-mechanischen Charakteristiken auf der gesamten Reibfläche wird der gleichmässige Widerstand verschiedener Oberflächenzonen geben die Zerstörung unter Einwirkung hoher wärmemechanischer Spannungen nicht gewährleistet, die Schwingung nicht gedämpft und das Klirren beim Bremsen nicht beseitigt, was sich auf die Nutzungsdauer des Erzeugnisses negativ auswirkt.

Es ist bekannt (P.I.Orlov "Osnovy konstruirovania" (Konstruierungsgrundlagen), methodisches Nachschlagewerk, Buch 1, 1988, S. 131), dass eine verminderte Festigkeit und Steifigkeit von Leichtlegierungen deren Einsatz in Stützkonstruktionen ausschliesst. Es empfiehlt sich im besonderen, die Wälzlager in Bauteilen aus Leichtlegierungen auf zwischengeschaltete Stahlhülsen zu montieren.

Die Verwendung von Bewehrungshülsen führt jedoch zur Erhöhung des Materialaufwandes und des Gewichtes der Konstruktion und gewährleistet zum anderen nicht die optimale Tragfähigkeit der Reibfläche sowie das Übermass der Verbindung und den Widerstand gegen Lösen, was sich im Endergebnis negativ auf die Nutzungsdauer der Reibscheibe auswirkt.

Es ist ein Friktionselement einer Reibpaarung, nämlich eine Bremsscheibe, bekannt (SU, A, 846875), die ein dreidimensionales Gerüst hat, das in einer Matrix untergebracht ist, welche aus einem Werkstoff mit hoher Wärmeleitzahl hergestellt ist. Auf jeder der stirnseitigen Reibflächen ist eine Schicht eines verschleissfesten Werkstoffes vorhanden.

Beim Bremsen der Scheibe wird Wärme erzeugt, die von den Reibflächen mittels eines flüssigen, im Gerüst umlaufenden Wärmeträgers abgeführt wird.

Da aber die Reibflächen der Scheibe während des Betriebes ungleichmässige Kraft- und Wärmespannungen in verschiedenen Zonen erfahren, während die Charakteristiken des Reibwerkstoffs auf der oben erwähnten gesamten Fläche gleich sind, kann bei dieser Scheibe ein gleichmässiger Widerstand verschiedener Zonen der Reibflächen gegen Zerstörung nicht gewährleistet und das Klirren nicht beseitigt werden, was einen vorzeitigen Ausfall der Scheibe zur Folge hat.

Die Beschichtung der Reibflächen der Scheibe aus einem verschleissfesten Werkstoff führt nicht deren optimale Tragfähigkeit herbei.

Offenbarung der Erfindung

Der Erfindung liegt die Aufgabe zugrunde, ein derartiges Friktionselement einer Reibpaarung zu schaffen, dessen Aufbau einen gleichmässigen Widerstand verschiedener Zonen der Reibfläche gegen Zerstörung während des Betriebes unter Sicherstellung ihrer optimalen Tragfähigkeit gewährleistet.

Diese Aufgabe wird dadurch gelöst, dass in einem Friktionselement einer Reibpaarung, das ein dreidimensionales Gerüst, welches in einer Matrix aus einem Werkstoff mit hoher Wärmeleitzahl untergebracht ist, und eine Reibfläche enthält, erfindungsgemäss das Gerüst aus einem verschleissfesten Werkstoff hergestellt und mindestens in der Zone der Reibfläche angeordnet ist, die ein regelmässiges Mikrorelief aufweist, welches durch die Matrix und das über deren Oberfläche ragende Stirnende des Gerüstes gebildet ist.

Die Oberflächen der Reibpaarung berühren sich an den am meisten hervorragenden Teilen. Solche Teile bei dem erfindungsgemässen Friktionselement sind die über die Matrix hervorragenden Teile, und da sie diskret und regelmässig auf der Reibfläche angeordnet sind, erweist sich die letztere als eine, die im wesentlichen dem tatsächlichen Flächeninhalt der Berührungsflächen entspricht. Infolgedessen wird an verschleissfestem Werkstoff nu r eine minimale Menge verbraucht, was sich auf die Selbstkosten für die Herstellung des Friktionselementes positiv auswirkt.

Eine derartige Ausbildung des Friktionselementes vergrössert ausserdem die gesamte Steifigkeit und Festigkeit der Konstruktion und verringert ihre Masse.

Da die Reibfläche des Friktionselementes teilweise durch die Matrix gebildet ist, die aus einem Werkstoff mit hoher Wärmeleitzahl hergestellt ist, wird die Wärmeabfuhr von der Reibfläche verbessert, wodurch die Nutzungsdauer des Erzeugnisses im ganzen erhöht wird.

Das Gerüst kann vorteilhafterweise in Form einer Zellenstruktur ausgebildet werden.

Eine derartige Ausbildung gewährleistet eine optimale Tragfähigkeit der Reibfläche und erhöht ihr Arbeitsvermögen und ihre Lebensdauer.

Das regelmässige Mikrorelief auf der Reibfläche kann vorzugsweise eine Zellenform aufweisen, die in bester Weise zur Erhöhung des Arbeitsvermögens und der Lebensdauer des Friktionselementes beiträgt.

Eine solche Ausführungsform des Friktionselementes kann vorzugsweise als Bremstrommel eines Personenkraftwagens, als Spurlager und dergleichen eingesetzt werden.

In einer bevorzugten Ausführungsform der Erfindung nimmt der Flächeninhalt der über die Matrix hinausragenden Stirnfläche des Gerüstes in Richtung von der Zone der Maximalbelastung zur Zone der Minimalbelastung proportional ab.

Der Flächeninhalt der Stirnfläche kann geändert werden, indem man die Zellengrösse und/oder die Wanddicke der Zellenstruktur und/oder die Anordnungsdichte der Zellen verändert.

Die Verstärkung der Reibfläche des Friktionselementes in der Zone der Maximalbelastung, die aufgrund des vergrösserten Flächeninhalts der Stirnfläche des Gerüstes erzielt werden kann, hat den Vorteil, dass sich die Abnutzung dieser Zone während des Betriebs verlangsamt. Somit werden Voraussetzungen für eine gleichmässige Abnutzung der Reibfläche, die ungleichmässige thermomechanische Spannungen erfährt, geschaffen, was zur Verlängerung der Nutzungsdauer des Erzeugnisses beiträgt.

Das Gerüst des Friktionselementes kann vorzugsweise in der Zone der Maximalbelastung aus einem verschleissfesteren Werkstoff als in der Zone der Minimalbelastung hergestellt werden.

Der differenzierte Einsatz von verschleissfesten Werkstoffen gestattet es, ausser den oben erwähnten Vorzügen auch die Selbstkosten für die Herstellung des Friktionselementes zu senken.

Für ein Friktionselement, das als Bremsscheibe eines Personenkraftwagens einsetzbar ist und zwei Arbeitsflächen besitzt, kann das Mikrorelief auf einer Oberfläche vorzugsweise konfigurationsmässig verschieden von dem regelmässigen Mikrorelief auf der anderen Oberfläche ausgebildet werden.

Eine solche Ausbildung wirkt dem Auftreten von Eigen schwingungen, einer Resonanzform der Welle, dem Klirren und Piepsen entgegen.

Zwischen den Zellen des Gerüsts können vorzugsweise Platten angeordnet werden.

Mit den Platten kann ebenfalls den oben erwähnten Mängeln vorgebeugt werden.

In einer der Ausführungsformen der Erfindung ist das Gerüst des Friktionselementes aus einem gewellten Band hergestellt.

Wenn das Friktionselement in der Bremstrommel eines Personenkraftwagens eingesetzt wird, muss das Band schraubenlinienförmig aufgewickelt sein.

Der Vorteil der erfindungsgemäss vorgeschlagenen Ausführung des Friktionselementes gegenüber den eingangs beschriebenen besteht darin, dass es weniger arbeitsintensiv bei der Herstellung ist, weil der Prozess der Formung des Metalls zu gewellten Bändern nicht arbeitsintensiv und produktionsgerecht ist.

Es ist auch vorteilhaft, zwischen den Windungen des gewellten Bandes die Windungen eines flachen Bandes anzuordnen.

Eine solche Ausführung beugt der möglichen Paketierung der Bänder vor und trägt somit zur qualitätsgerechten Formgebung des Friktionselementes bei.

Es ist vorteilhaft, dass das Gerüst mindestens aus zwei gleichachsig angeordneten Teilen mit entgegengesetzt gerichteter Aufwicklung besteht.

Eine solche Ausführung ist sehr förderlich für den Ausgleich der axialen Komponente und die Dämpfung der Schwingung und trägt somit zur Erhöhung der Lebensdauer des Friktionselementes bei.

Wenn das Friktionselement in der Bremsscheibe eines Personenkraftwagens oder in der Kupplungsscheibe eingesetzt wird, muss das gewellte Band spiralförmig mit einer Steigung aufgewickelt werden, die sich in Vergrösserungsrichtung des Radius der Spirale vergrössert.

Eine solche Aufwicklung hat den Vorteil dass der Reibwerkstoff der Bänder entsprechend den auf der Reibfläche wirkenden thermomechanischen Spannungen angeordnet wird, d.h. dichter in der Zone der Maximalbelastung des Erzeugnisses und weniger dicht in der Zone der Minimalbelastung, was einen gleichmässigen Widerstand gegen Zerstörung der Reibfläche begünstigt.

Demselben Ziel dient auch die Ausführung des gewellten Bandes mit einer Steigung und einer Hohe, die über seine Länge in Vergrösserungsrichtung des Radius der Spirale zunehmen.

Die das Gerüst bildenden Bänder können vorzugsweise mit Riffeln versehen werden.

Die Riffeln vergrössern die Oberfläche des Gerüstes und verstärken seine Steifigkeit und Festigkeit.

Weiterhin ist es vorteilhaft, mindestens eines der Bänder des Gerüstes gelocht auszubilden.

Die Lochung verstärkt den Ankereffekt der Befestigung der Bänder in der Matrix und verbessert die Wärmeabfuhr, was im Endergebnis die Lebensdauer des Friktionselementes erhöht.

Der Aufwicklungssinn der Spirale kann vorzugsweise mit dem Drehsinn des Friktionselementes, z.B. einer Bremsscheibe, übereinstimmen, damit während des Betriebes auf sie Druckspannungen einwirken.

Beschreibung

Weitere Ziele und Vorzüge der vorliegenden Erfindung werden aus der nachfolgenden eingehenden Beschreibung von Ausführungsbeispielen anhand von Zeichnungen näher erläutert. In den Zeichnungen zeigt:

Fig. 1 eine Bremsscheibe gemäss der Erfindung;

Fig. 2 die Bremsscheibe im Grundriss;

Fig. 3 ein Fragment der Reibfläche im Schnitt;

Fig. 4 ein Gerüst in Form einer Zellenstruktur in Axonometrie;

Fig. 5 ein Fragment der Reibfläche mit hexagonaler Form der Zellendes Gerüstes im Grundriss;

Fig. 6 ein Fragment eines Friktionselementes, das das Vorhandensein eines Mikroreliefs auf der Reibfläche veranschaulicht;

Fig. 7 ein Fragment einer Reibfläche mit einer Gitterkonstruktion des Gerüsts im Grundriss;

Fig. 8 ein Fragment eines Friktionselementes mit der Gitterkonstruktion des Gerüsts im Schnitt;

Fig. 9 ein Fragment einer Ausführungsform der Reibfläche;

Fig. 10 ein Fragment eines Friktionselementes mit einem Gerüst in Form eines räumlichen Netzes im Schnitt;

Fig. 11 eine Bremsscheibe mit sich ändernder Anordnungsdichte der Zellen des Gerüstes auf der Reibfläche im Grundriss;

Fig. 12 eine Bremsscheibe mit sich ändernder Zellengrösse des Gerüsts auf der Reibfläche und mit zwischen den Zellen angeordneten Platten im Grundriss;

Fig. 13 eine Bremsscheibe, auf deren gegenseitig entgegengesetzten Reibflächen die Gerüstzellen in unterschiedlicher Konfiguration ausgebildet sind;

Fig. 14 die Bremsscheibe, die in Fig. 13 dargestellt ist in Ansicht von links;

Fig. 15 die Bremsscheibe, die in Fig. 13 dargestellt ist in Ansicht von rechts;

Fig. 16 eine Bremsscheibe mit einem Gerüst, das aus einem gewellten Band besteht ;

Fig. 17 ein Gerüst, das aus zwei Teilen besteht;

Fig. 18 ein Gerüst, das aus mehreren Paaren von Bandwindungen hergestellt ist, die einen entgegengesetzten Aufwicklungssinn haben;

Fig. 19 ein Gerüst, das in Form eines gewellten Bandes ausgeführt ist, das zu einer flachen Spirale aufgewickelt ist;

Fig. 20 ein Fragment eines Friktionselementes, dessen Gerüstbänder Löcher und Riffeln aufweisen.

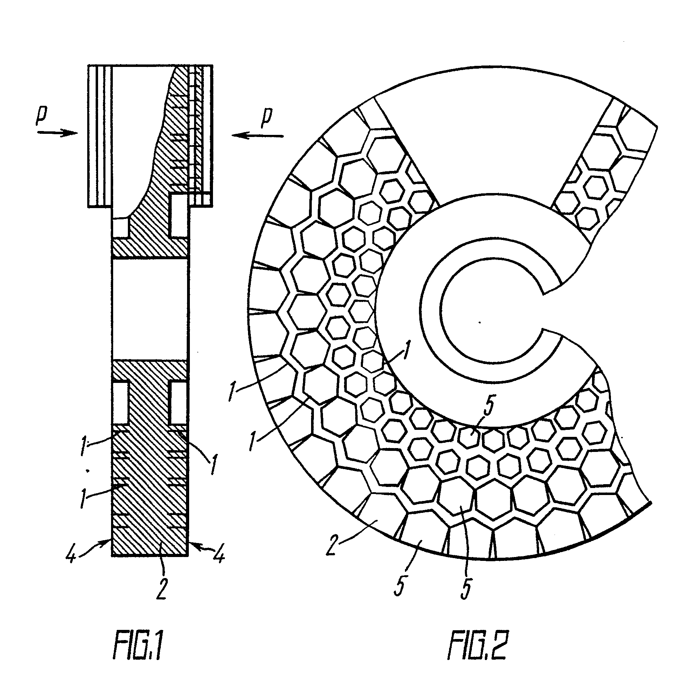

Ein Friktionselement einer Reibpaarung enthält ein dreidimensionales Gerüst 1 (Fig. 1, 2, 3, 4), das in einer Matrix 2 aus einem Werkstoff mit hoher Wärmeleitzahl untergebracht ist.

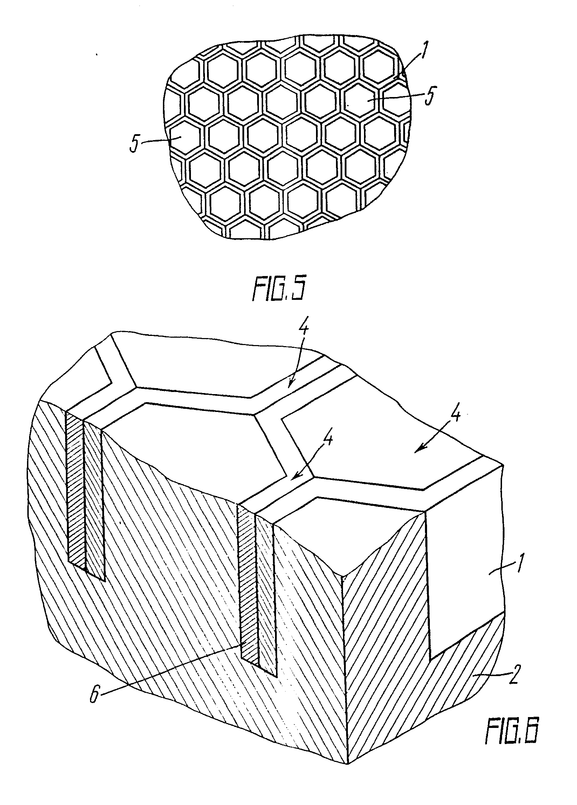

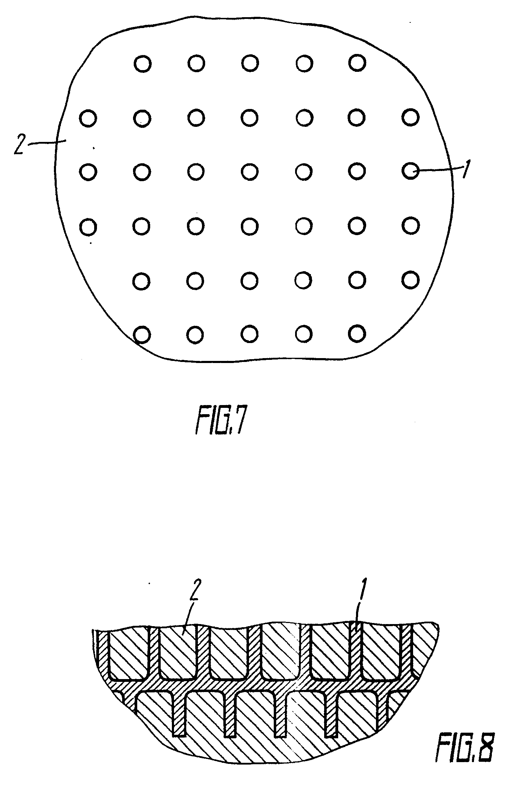

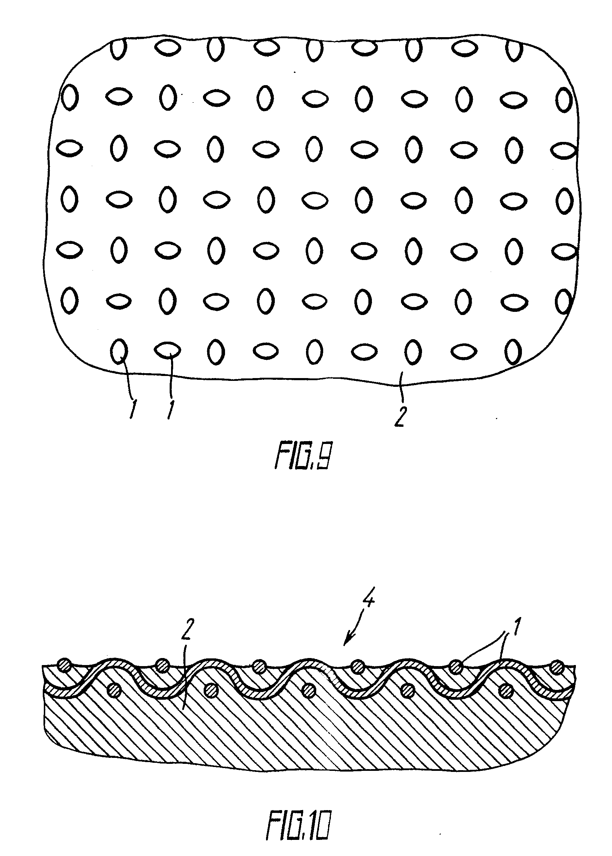

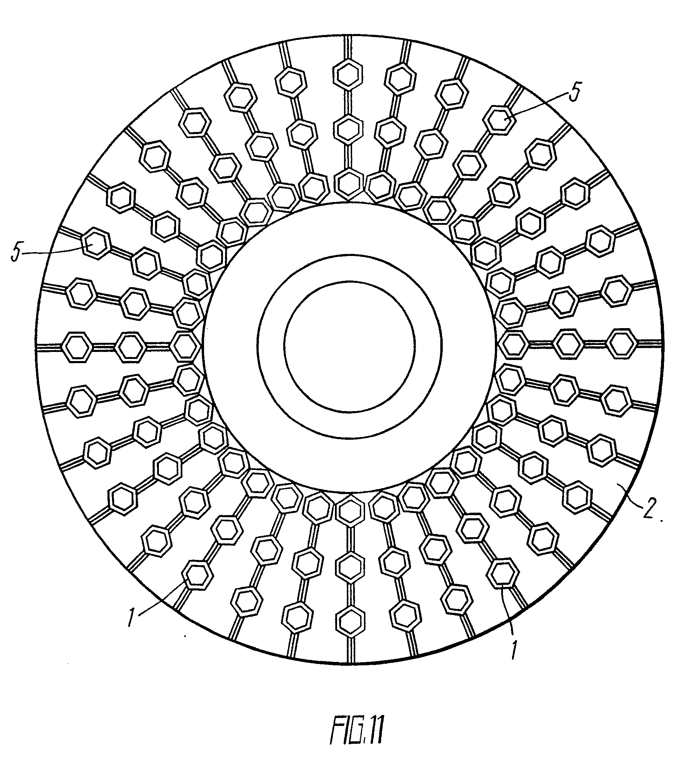

Das Gerüst 1 kann in Form von Waben (Fig. 2, 4, 5) , eines Gitters (Fig. 7, 8), eines räumlichen Netzes (Fig. 9, 10) und dergleichen aus einem Werkstoff ausgebildet sein, der eine höhere Festigkeit und Wärmeverschleissfestigkeit hat als der wärmeabführende Werkstoff der Matrix 2, welcher dieses Gerüst ausfüllt.

Für die Bremstrommel eines Personenkraftwagens kann das Gerüst 1 aus Stahl und die Matrix 2 aus einer Aluminiumlegierung hergestellt sein.

Für schwer belastete Friktionsbauteile stellt man das Gerüst 1 und die Matrix 2 jeweils aus Legierungen auf der Basis von Mo, W und Kupfer her.

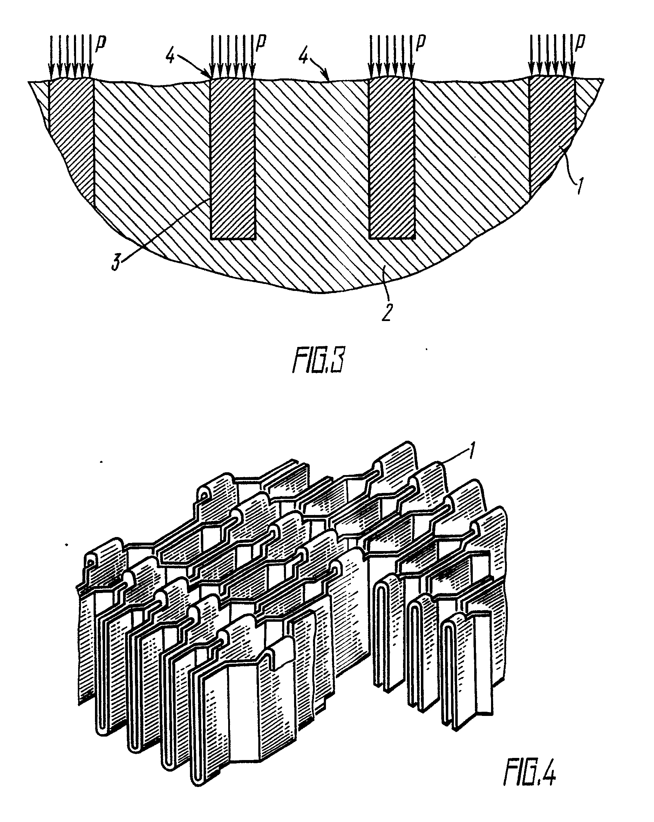

Das Gerüst 1 hat eine Beschichtung (Fig 3), die aus einem Werkstoff besteht, der mit dem Werkstoff des Gerüstes 1 und der Matrix 2 vereinbar ist und eine gute Wärmeleitfähigkeit besitzt.

Für das Gerüst 1 auf der Basis von Fe und für die Matrix 2 auf der Basis von Al kann als Beschichtung vorzugsweise Kupfer verwendet werden.

Das Gerüst 1 ragt teilweise mit seiner Stirnfläche über die Matrix 2 hervor und bildet gemeinsam mit der letzteren eine Reibfläche 4 mit diskret angeordneten Abschnitten eines verschleissfesten Werkstoffes, über die während des Betriebs der Reibpaarung die Berührung vor sich geht.

Um die Steifigkeit des Friktionselementes zu erhöhen, kann man das Gerüst 1 nicht nur in der Zone der Reibfläche 4, sondern auch im gesamten Volumen des Friktionselementes unterbringen.

Die Fläche des Teils des Gerüstes 1 auf der Reibfläche 4 macht im Verhältnis zur gesamten Reibfläche 4 von 3 bis 70% aus, was dem tatsächlichen Berührungsflächeninhalt entspricht.

Vorzugsweise kann das Friktionselement in Form eines bewehrten Gußstücks hergestellt werden.

Seine Formgebung ist durch Sintern oder Aufstäuben möglich.

Nach Ausfüllen des Gerüstes 1 mit dem wärmeabführenden Werkstoff der Matrix 2 wird die Reibfläche 4 mit dem Ziel behandelt, ihr die endgültige Form, die Abmessungen und die Rauhigkeit zu geben.

Im Ergebnis nimmt sie die Form einer Oberfläche mit regelmässigem Mikrorelief an.

Bei der Benutzung des Wabengerüstes 1 entspricht die Reibfläche 4 einer Oberfläche mit vollständig regelmässigem Mikrorelief, beispielsweise mit hexagonalem Mikrorelief (Fig. 2, 5, 6, 11, 12).

Für ein Friktionselement, das in der Bremsscheibe eines Personenkraftwagens und in einer Kupplungsscheibe zum Einsatz kommt, ist eine Ausführung am günstigsten, bei welcher der Stirnflächeninhalt des Gerüstes 1 sich von der Zone der Maximalbelastung zur Zone der Minimalbelastung (Fig. 2, 11, 12, 13, 14, 15, 19) proportional vermindert.

Es ist bekannt, dass die Verschleissfläche der Reibscheiben eine hyperbolische Form aufweist und daß die Verformung und der Verschleiss bei der Entfernung des Punkts der Konjugationsfläche von der Rotationsachse infolge der Druckminderung zurückgehen.

Somit ändern sich bei den hier angesprochenen Scheiben die während des Betriebs auftretenden Spannungen in radialer Richtung, und zwar so, dass sie sich zum Umfang hin vermindern.

Entsprechend den Änderungen der Spannungen kann man den Stirnflächeninhalt des Gerüsts 1 verändern, indem man die Grösse der Zellen 5 des Gerüstes 1 und/oder die Dicke seiner Wände 6 und/oder die Anordnungsdichte der Zellen 5 ändert.

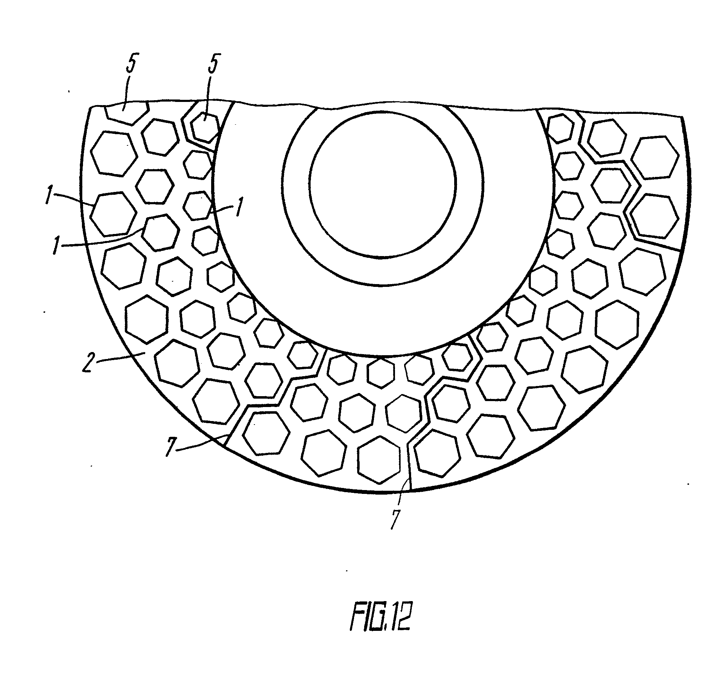

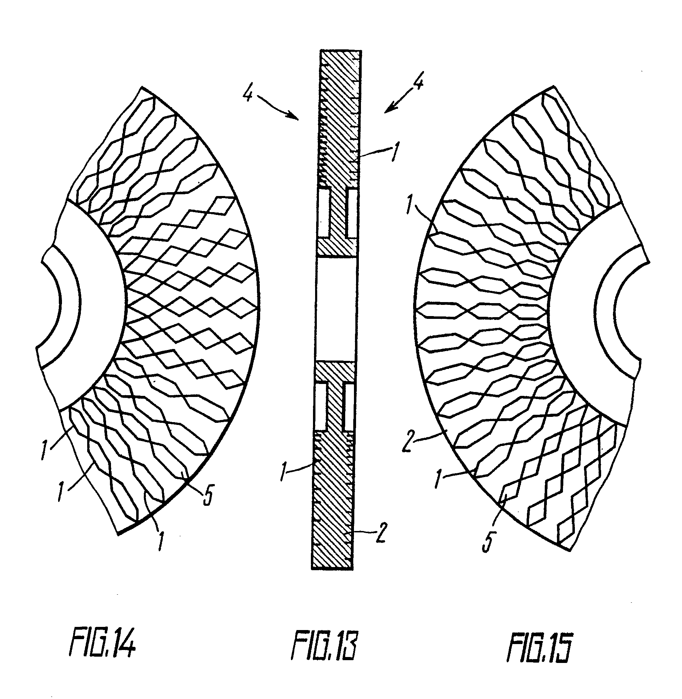

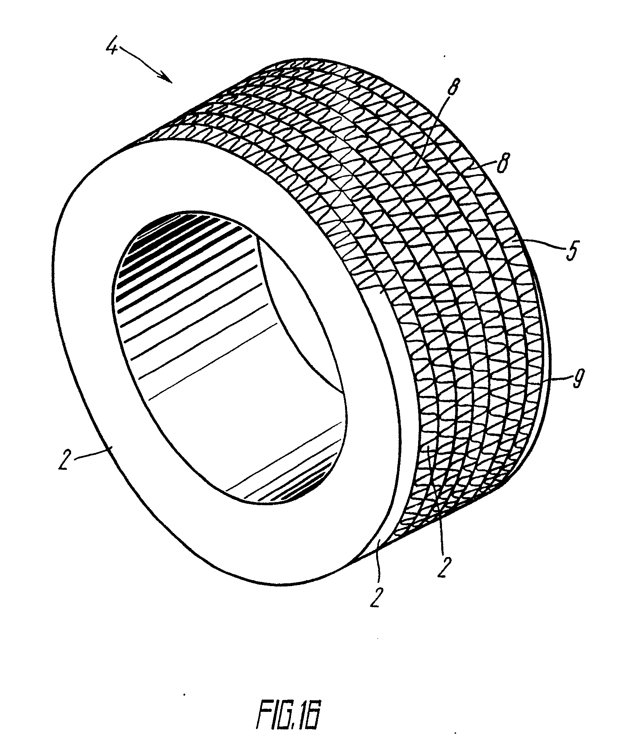

Für die Bremsscheiben von Personenkraftwagen, die zwei Reibflächen 4 (Fig. 13) haben, verstärkt man jede von ihnen durch ein Gerüst 1, das unterschiedliche Konfigurationen der Zellen 5 (beispielsweise eine viereckige und eine hexagonale) hat, welche verschiedene Konturen des regelmässigen Mikroreliefs (Fig. 14, 15) bilden, oder man bewehrt die Reibflächen 4 der Scheibe zusätzlich durch Platten 7 (Fig. 12), die zwischen den Zellen 5 des Gerüstes 1 radial verteilt angeordnet sind, was Vibrationen beseitigt.

Das Gerüst 1 kann aus in bezug auf die Verschleissfestigkeit unterschiedlichen Werkstoffen ausgeführt sein. In der Zone der Maximalbelastung sind Werkstoffe einzusetzen, die bessere physikalischmechanische Eigenschaften besitzen als in den Zonen der Minimalbelastung.

Das Gerüst 1 kann aus einem gewellten Band 8 (Fig. 16) hergestellt sein. Für das Friktionselement einer Bremstrommel ist das gewellte Band 8 schraubenlinienförmig aufzuwickeln, wobei zwischen den Windungen der Spirallinie die Windungen eines flachen Bandes 9 angeordnet werden.

Die Bänder 8, 9 sind mit ihren Stirnflächen zur Reibfläche 4 des Friktionselementes hin orientiert, so dass sich auf der letzteren ein regelmässiges Mikrorelief ausbildet, dessen Geometrie durch die Geometrie der durch die Bänder 8, 9 gebildeten Zellen 5 bestimmt ist.

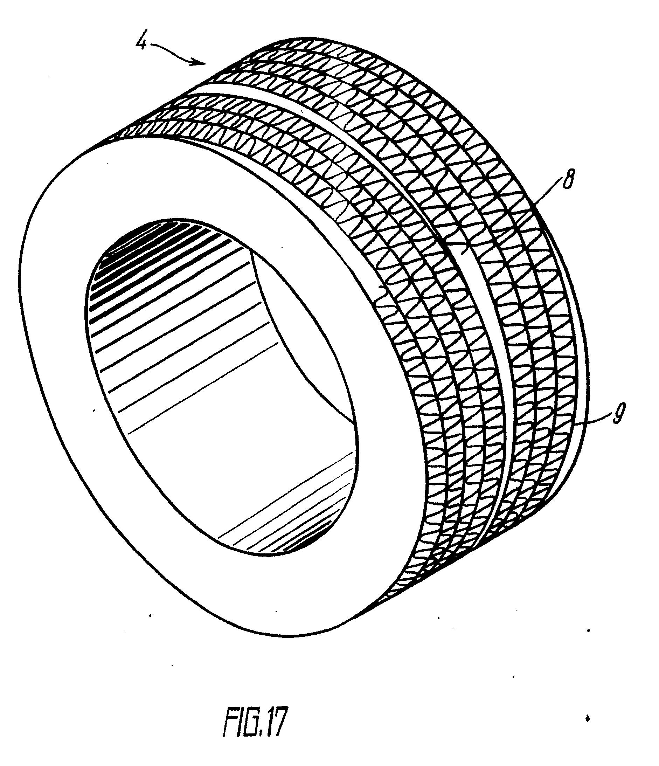

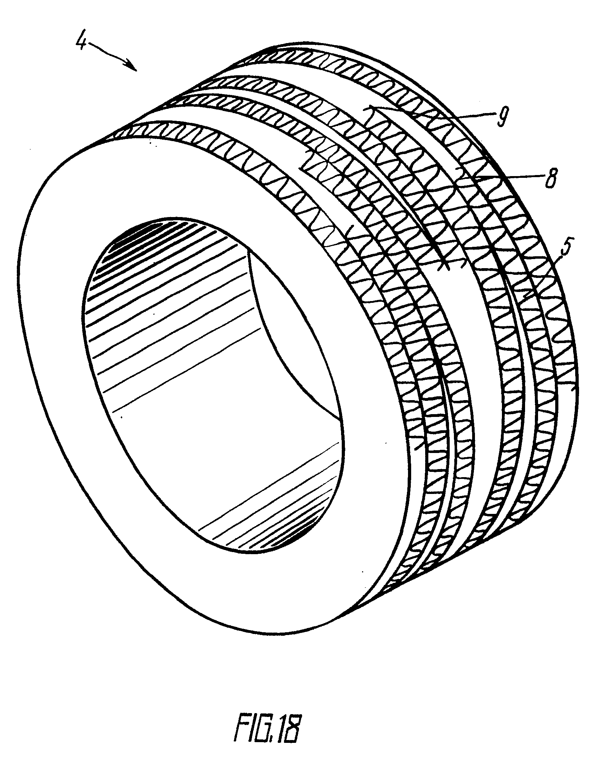

In der Bremstrommel ist ein solches Gerüst 1 aus mindestens zwei gleichachsig angeordneten Teilen mit entgegengesetzt gerichteter Aufwicklung (Fig. 17, 18) hergestellt.

Für den Fachmann auf diesem Gebiet ist es augenfällig, dass die Ausführung des erfindungsgemässen Friktionselementes durch dessen Betriebsbedingungen bestimmt wird, und demgemäss wird die Wahl der Sickengrösse und der Dicke der Bänder 8, 9 getroffen.

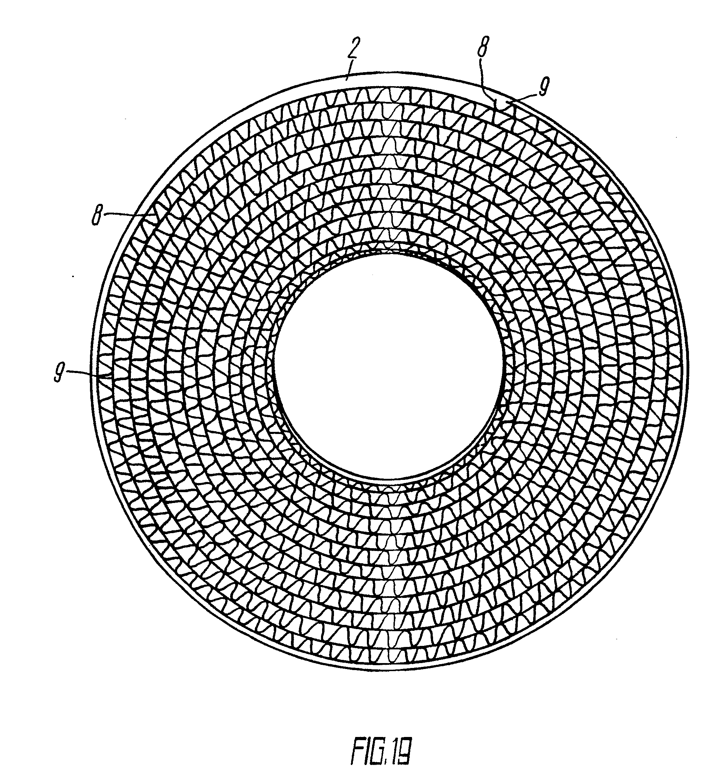

Für das Friktionselement einer Bremsscheibe ist das gewellte Band 8 spirallinienförmig aufgewickelt, wobei die Steigung der Spirale in Vergrösserungsrichtung ihres Radius (Fig. 19) entsprechend der Anordnung der Belastungszonen der Reibfläche 4 wächst und die Steigung und die Höhe der Sicken auf der Länge der Spirale in Vergrösserungsrichtung ihres Radius zunehmen. Der Aufwicklungssinn der Spirale stimmt mit dem Drehsinn des Friktionselementes überein. Zwischen den Windungen des gewellten Bandes 8 sind Windungen des flachen Bandes 9 angeordnet. Die Bänder 8, 9 sind mit ihren Stirnflächen zur Reibfläche 4 hin orientiert, so dass sich auf der letzteren ein Mikrorelief herausbildet, dessen Geometrie ebenso durch die Geometrie der durch die Bänder 8, 9 gebildeten Zellen 5 bestimmt ist.

Beim Aufwickeln der Bänder 8, 9 zu einer Spirale vermindert sich ihre Anordnungsdichte jeweils in radialer Richtung.

Somit wird auf der Reibfläche 4 das Friktionsmaterial je nach deren Belastungscharakter angeordnet, und zwar in der Zone der Maximalbelastung dichter als in der Zone der Minimalbelastung.

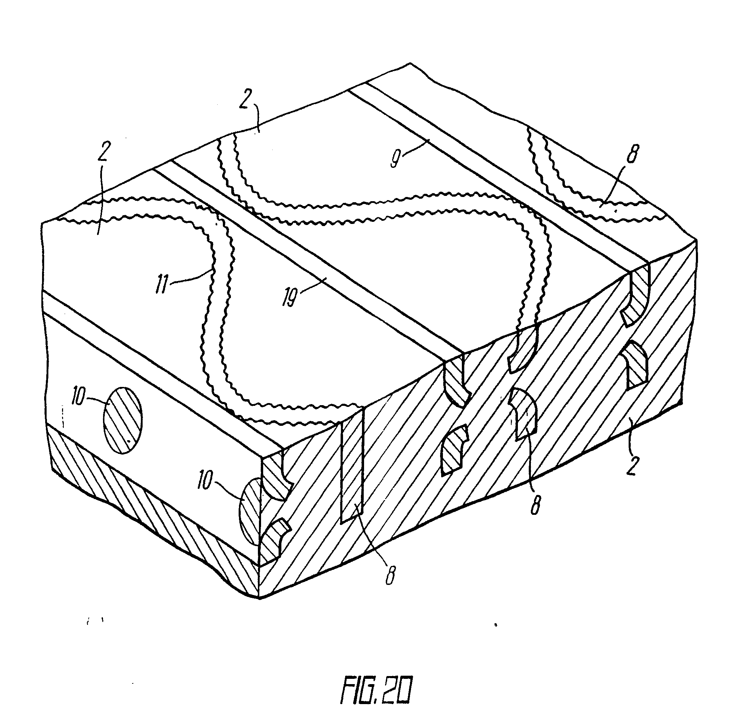

Um den Ankereffekt der Befestigung der Bänder 8, 9 in der Matrix 2 zu erhöhen, versieht man die letzteren mit einer Lochung 10 (Fig. 20), wodurch der Prozess der Wärmeabfuhr von der Reibfläche 4 in den Werkstoff der Matrix 2 ebenfalls intensiviert wird.

Auf der Oberfläche der Bänder 8, 9 sind weiter Riffeln 11 vorgesehen. Die Riffeln vergrössern die Oberfläche des Bewehrungsgerüstes 1 und verstärken somit seine Steifigkeit und Festigkeit.

Es sei die Funktionsweise des Friktionselementes am Beispiel des Einsatzes in der Bremsscheibe eines Personenkraftwagens, d.h. einer Scheibe mit zwei Reibflächen 4, betrachtet. Auf die letzteren wirken Kräfte ein, die der Anpresskraft P der Bremsbacken (Fig. 1) entsprechen. Die Berührung zweier Flächen 4 erfolgt an den am meisten herausragenden Teilen. In dem erfindungsgemässen Friktionselement sind solche Teile die Stirnflächen des Gerüstes 1, die diskret über die Matrix 2 hervorragen und das regelmässige Mikrorelief formieren.

Bei der Bremsung wird auf den Reibflächen 4 Wärme erzeugt, die über den wärmeabführenden Matrixwerkstoff vom Gerüst 1 abgeführt wird. Die Beschichtung 3 des Gerüstes 1, die eine hohe Wärmeleitfähigkeit besitzt und mit dem wärmeabführenden Matrixwerkstoff gut vereinbar ist, begünstigt diesen Prozess, weil die Beschichtung 3 die Wärmebarriere zwischen dem Gerüst 1 und der Matrix 2 ausschliesst. Infolgedessen verteilt sich die Wärme im Volumen des Friktionselementes.

Das erfindungsgemässe Friktionselement eignet sich auch als Stützkonstruktion, beispielsweise als Lagerhülse mit einer Reibfläche, die analog der beschriebenen ausgebildet ist und funktioniert.

Die Diskretheit und die Regelmässigkeit der Anordnung des Friktionsmaterials auf den Reibflächen und die konduktive Kühlung mittels des wärmeabführenden Matrixmaterials gestatten es, das Temperaturfeld und die Verschleissfestigkeit zu stabilisieren, was im grossen und ganzen die Lebensdauer des Erzeugnisses erhöht.

Industrielle Anwendbarkeit

Die Erfindung kann in Bremsanlagen, insbesondere von Personenkraftwagen, in Kupplungsscheiben, in verschiedenen Stützkonstruktionen und dergleichen angewendet werden.

**Ansprüche**

1. Friktionselement einer Reibpaarung, das ein dreidimensionales Gerüst (1), das in einer Matrix (2) aus einem Werkstoff mit hoher Wärmeleitzahl untergebracht ist, und eine Reibfläche (4) enthält, dadurch **gekennzeichnet,** dass das Gerüst (1) aus einem verschleissfesten Werkstoff hergestellt und mindestens in der Zone der Reibfläche(4) angeordnet ist, die ein regelmässiges Mikrorelief aufweist, welches durch die Matrix (2) und das über deren Oberfläche ragende Stirnende des Gerüstes (1) gebildet ist.

2. Friktionselement nach Anspruch 1, dadurch **gekennzeichnet,** dass das Gerüst (1) in Form einer Zellenstruktur ausgebildet ist.

3. Friktionselement nach Anspruch 2, dadurch **gekennzeichnet,** dass das regelmässige Mikrorelief der Reibfläche (4) eine Zellenform aufweist.

4. Friktionselement nach einem der Ansprüche 1 bis dadurch **gekennzeichnet,** dass der Flächeninhalt der über die Matrix x (2) ragenden Stirnfläche des Gerüstes (1 ) in Richtung von der Zone der Maximalbelastung zur Zone der Minimalbelastung proportional abnimmt.

5. Friktionselement nach Anspruch 4, dadurch **gekennzeichnet,** dass die Zellen (5) des Gerüstes (1) derart ausgeführt sind, dass ihre Abmessungen sich proportional von der Zone der Maximalbelastung zur Zone der Minimalbelastung ändern.

6. Friktionselement nach Anspruch 4, dadurch **gekennzeichnet,** dass die Stirnfläche des Gerüstes (1) derart ausgeführt ist, dass die Dicke der Wände sich proportional von der Zone der Maximalbelastung zur Zone der Minimalbelastung ändert.

7. Friktionselement nach Anspruch 4, dadurch **gekennzeichnet,** dass die Zellen (5) des Gerüstes (1) derart angeordnet sind, dass ihre Anordnungsdichte sich proportional von der Zone der Maximalbelastung zur Zone der Minimalbelastung ändert.

8. Friktionselement nach einem der Ansprüche 1 bis 7, dadurch **gekennzeichnet,** dass das Friktionselement eine zusätzliche Reibfläche (4) aufweist, deren regelmässiges Mikrorelief sich konfigurationsmässig vom regelmässigen Mikrorelief auf der ersten Reibfläche (4) unterscheidet.

9. Friktionselement nach Anspruch 8, dadurch **gekennzeichnet,** dass es mit Platten (7) versehen ist, die zwischen den Zellen (5) des Gerüstes (1) in den Reibflächen (4) angeordnet sind.

10. Friktionselement nach einem der Ansprüche 1 bis 9, dadurch **gekennzeichnet,** dass das Gerüst (1) aus Werkstoffen hergestellt ist, die im Hinblick auf Verschleissfestigkeit unterschiedlich sind, wobei der Werkstoff in der Zone der Maximalbelastung gegenüber dem in der Zone der Minimalbelastung verschleissfester ist.

11. Friktionselement nach einem der Ansprüche 1 bis 8, dadurch **gekennzeichnet,** dass das Gerüst (1) aus einem gewellten Band (8) hergestellt ist.

12. Friktionselement nach Anspruch 11, dadurch **gekennzeichnet,** dass das gewellte Band (8) spirallinienförmig gewickelt ist.

13. Friktionselement nach Anspruch 12, dadurch **gekennzeichnet,** dass zwischen den Windungen des gewellten Bandes (8) die Windungen eines flachen Bandes (9) angeordnet sind.

14. Friktionselement nach einem der Ansprüche 11 bis 13, dadurch **gekennzeichnet,** dass das Gerüst (1) mindestens aus zwei gleichachsig angeordneten Teilen mit entgegengesetzt gerichteter Aufwicklung besteht.

**15.** Friktionselement nach Anspruch 11, dadurch **gekennzeichnet,** dass das gewellte Band (8) spirallinienförmig angeordnet ist, wobei die Steigung der Spirale in Vergrösserungsrichtung ihres Radius zunimmt.

**16.** Friktionselement nach Anspruch 15, dadurch **gekennzeichnet,** dass die Steigung und Hohe der Sicke des gewellten Bandes (8) auf seiner Länge in Vergrösserungsrichtung des Radius der Spirale zunehmen.

**17.** Friktionselement nach Anspruch 15 oder 16, dadurch **gekennzeichnet,** dass der Aufwicklungssinn der Spirale mit dem Drehsinn des Friktionselementes übereinstimmt.

**18.** Friktionselement nach einem der Ansprüche 11 bis 17, dadurch **gekennzeichnet,** dass die Bänder (8, 9) mit Riffeln (11)versehen sind.

**19.** Friktionselement nach einem der Ansprüche 11 bis 18 dadurch **gekennzeichnet,** dass mindestens eines der Bänder (8, 9) gelocht ist.

**20.** Bremsscheibe eines Personenkraftwagens, die ein nach einem der Ansprüche 1 bis 11, 15 bis 19 ausgebildetes Friktionselement ist.

**21.** Bremstrommel eines Personenkraftwagens, die ein nach einem der Ansprüche 1 bis 7, 11 bis 14 ausgebildetes Friktionselement ist.

**22.** Schaltkupplung, in der die Kupplungsscheibe ein nach einem der Ansprüche 1 bis 11, 15 bis 19 ausgebildetes Friktionselement ist.

FIG.1

FIG.2

*FIG.3*

*FIG.4*

FIG.5

FIG.6

FIG.7

FIG.8

FIG.9

FIG.10

FIG.11

14

FIG.12

FIG.14    FIG.13    FIG.15

FIG.16

FIG.17

FIG.18

FIG.19

FIG. 20

# INTERNATIONAL SEARCH REPORT

International Application No PCT/SU 90/00085

**I. CLASSIFICATION OF SUBJECT MATTER** (if several classification symbols apply, indicate all) 6

According to International Patent Classification (IPC) or to both National Classification and IPC

| Int.Cl.5 | F16D 69/102 |
|---|---|

**II. FIELDS SEARCHED**

Minimum Documentation Searched 7

| Classification System | Classification Symbols |
|---|---|
| Int.Cl.5 | F16D 69/100, 69/102, 65/04, 65/12<br>B32B 3/00, 3/28, 5/12 |

Documentation Searched other than Minimum Documentation
to the Extent that such Documents are Included in the Fields Searched 8

**III. DOCUMENTS CONSIDERED TO BE RELEVANT**

| Category* | Citation of Document, 11 with indication, where appropriate, of the relevant passages 12 | Relevant to Claim No. 13 |
|---|---|---|
| A | SU, A1, 846875 (IVANO-FRANKOVSKY INSTITUT NEFTI I GAZA) 15 July 1981 (15.07.81) see figures 1-3, column 1, lines 28-30; column 2, lines 1-3, 20-29 (cited in the description) | 1,20 |
| A | SU, A1, 312992 (D. B. MIRZADZHANOV et al) 11 October 1971 (11.10.71) | 2,21 |
| A | US, A, 4278153 (GOODYEAR AEROSPACE CORPORATION ) 14 July 1981 (14.07.81) see figures 2,5; the abstract | 2 |
| A | SU, A3, 639482 (SKF COMPANIE APPLICATION MECHANIQUE) 25 December 1978 (25.12.78), see figure 3, column 4, lines 17-30 | 1 |
| A | US, A, 4042085 (CATERPILLAR TRACTOR, CO) 16 August 1977 (16.08.77) see the abstract | 1 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 8 June 1990 (08.06.90) | 6 July 1990 (06.07.90) |

| International Searching Authority | Signature of Authorized Officer |
|---|---|
| ISA/SU | |

Form PCT/ISA/210 (second sheet) (January 1985)

**III. DOCUMENTS CONSIDERED TO BE RELEVANT   (CONTINUED FROM THE SECOND SHEET)**

| Category* | Citation of Document, with indication, where appropriate, of the relevant passages | Relevant to Claim No |
|---|---|---|
| A | SU, A1, 893587 (G. M. IVANOV et al) 5 January 1982 (05.01.82) see figure 1, column 2 | 9 |
| A | SU, A1, 1038260 (B.M. SOIKIN) 30 August 1983 (30.08.83) see the abstract | 5,7,11 |
| A | SU, A1, 921876 (INSTITUT WEKHANIKI POLIMEROV LATVIISKOI SSR) 25 April 1982 (25.04.82) see figures 1,2; column 3, lines 1-7 the claims | 5-7,11 |
| A | EP, A1, 0106782 (ABEX CORPORATION) 25 April 1984 (25.04.84), see the abstract | 3 |
| A | US, A, 3429766 (RAYBESTOS-MANHATTAN, INC) 25 February 1969 (25.02.69) see figures 1,3; the abstract | 15,18,22 |